# EUROPÄISCHE PATENTSCHRIFT

(11) **EP 2 969 367 B1**
(45) Veröffentlichungstag und Bekanntmachung des Hinweises auf die Patenterteilung: **30.01.2019**
(21) Anmeldenummer: 14709299.3
(22) Anmeldetag: 11.03.2014
(51) Int. Cl.: B23K 26/03, B23K 26/06, B23K 26/08

(54) **WERKZEUGMASCHINE MIT EINER VORRICHTUNG ZUM BETREIBEN DIESER WERKZEUGMASCHINE**
MACHINE TOOL WITH A DEVICE FOR OPERATING THE MACHINE TOOL
MACHINE-OUTIL AVEC UN DISPOSITIF POUR FAIRE FONCTIONNER LA MACHINE-OUTIL

(30) Priorität: 11.03.2013 DE 102013204151
(43) Veröffentlichungstag der Anmeldung: 20.01.2016
(73) Patentinhaber: Continental Automotive GmbH, 30165 Hannover (DE)
(72) Erfinder: GARN, Rüdiger, 09577 Niederwiesa OT Braunsdorf (DE); LENK, Andreas, 01728 Bannewitz Ot Possendorf (DE); SCHRÖDER, Martin, 93093 Donaustauf (DE)
(86) Internationale Anmeldenummer: PCT/EP2014/054733
(87) Internationale Veröffentlichungsnummer: WO 2014/140033

(56) Entgegenhaltungen:
- DE-A1-102008 015 403
- DE-A1-102008 015 403
- JP-A- 2008 087 023
- JP-A- 2011 124 455
- JP-A- 2011 124 455
- US-A- 4 316 074
- US-A- 4 316 074
- US-A1- 2003 089 690
- US-A1- 2003 089 690
- US-A1- 2012 211 923
- US-B1- 6 818 857

## Beschreibung

Die Erfindung betrifft eine Werkzeugmaschine zum Bearbeiten eines Werkstücks gemäß dem Oberbegriff des Anspruchs 1 (siehe, z.B., US6 818 857 B). Klassische Verfahren zur Werkstückbearbeitung, wie beispielsweise Drehen, neigen häufig zur Gratbildung oder benötigen lange Prozesszeiten.
Aus der US 4 316 074 ist eine Vorrichtung zum Betreiben einer Werkzeugmaschine bekannt. Diese weist eine Rotationseinheit auf, die dazu ausgebildet ist, ein Werkstück um eine Rotationsachse mit einem einstellbaren Drehzahlverlauf zu rotieren sowie ein Ultrakurzpulslaser zum Erzeugen von Laserpulsen, der so angeordnet ist, dass möglichst der Laserpuls im Material des Werkstücks abgetragen wird. Die Vorrichtung stellt abhängig von Geometriedaten einer vorgegebenen Geometrie den Drehzahlverlauf ein.
Aus der US 2003/089690 A1 ist eine weitere Vorrichtung zum Betreiben einer Werkzeugmaschine mit einer Rotationseinheit bekannt. Das Werkstück wird um eine Rotationsachse mit einem einstellbaren Drehzahlverlauf rotiert. Ferner ist ein Ultrakurzpulslaser vorhanden um Laserpulse zu erzeugen. Der Ultrakurzpulslaser ist so angeordnet, dass mittels der Laserpulse Material des Werkstücks abgetragen wird. Der Drehzahlverlauf wird abhängig von den Geometriedaten eingestellt.
In der JP 2008 08 70 23 A ist eine Vorrichtung, bei der welcher der Scangeschwindigkeitsverlauf eingestellt wird, wenn der Durchmesser des mit einem anderen Rohr zu verschweißenden Rohres sich verringert. Hier bleibt die gesamte Energie des Laserstrahls konstant auf jedem Teil der Werkstückoberfläche.
Die US 2012/211923 A1 offenbart eine Vorrichtung, bei welcher der Scangeschwindigkeitsverlauf eingestellt wird, wenn das zu schneidende Profil geändert wird, das heißt nicht gerade sondern kurvig, sodass auch die gesamte Energie des Laserstrahls konstant bleibt.

Die Aufgabe, die der Erfindung zugrunde liegt, ist es, eine Vorrichtung zum Betreiben einer Werkzeugmaschine beziehungsweise eine korrespondierende Werkzeugmaschine zu schaffen, die jeweils dazu beiträgt, eine gute Bearbeitung eines Werkstücks zu ermöglichen.

Die Aufgabe wird gelöst durch die Merkmale des unabhängigen Anspruchs 1. Vorteilhafte Ausgestaltungen sind in den abhängigen Ansprüchen gekennzeichnet.

Die Werkzeugmaschine weist eine Rotationseinheit auf, die dazu ausgebildet ist, ein Werkstück um eine Rotationsachse mit einem einstellbaren Drehzahlverlauf zu rotieren. Des Weiteren weist sie einen Ultrakurzpulslaser auf zum Erzeugen von Laserpulsen, der so angeordnet ist, dass mittels der Laserpulse Material des Werkstücks abgetragen wird.

Mittels Laserpulsen eines Ultrakurzpulslasers kann ein sehr guter Materialabtrag erreicht werden. Beim Auftreffen der Laserpulse auf das Werkstück entsteht ein Kaltmaterialabtrag, bei dem das abzutragende Material direkt von einem festen Zustand in einen gasförmigen Zustand übergeht. Hierdurch kommt es gegebenenfalls nicht zu einer Gratbildung. Indem der Drehzahlverlauf eingestellt wird, kann eine Pulsüberlappung der Laserpulse eingestellt werden. Die Pulsüberlappung bedeutet in diesem Zusammenhang die Schnittfläche einer ersten Auftrefffläche eines ersten Laserpulses auf dem Werkstück mit einer Auftrefffläche eines zweiten Laserpulses auf dem Werkstück. Die Pulsüberlappung ist somit repräsentativ für eine Abtragungsrate beziehungsweise eine Intensität der Abtragung des Materials. Somit lässt sich auf einfache Weise mittels Einstellens eines Drehzahlverlaufs eine vorgegebene Geometrie des Werkstücks herstellen.

Die Oberflächenqualität ist abhängig von der Pulsüberlappung, die von dem Drehzahlverlauf abhängig ist. Somit lässt sich mittels Einstellens des Drehzahlverlaufs die Oberflächenqualität auf einfache Weise einstellen. Somit ist es auf einfache Weise möglich, eine besonders glatte und/oder raue Oberfläche und/oder eine vorgegebene funktionelle Oberfläche herzustellen. Gemäß einer vorteilhaften Ausgestaltung ist die Vorrichtung zusätzlich dazu ausgebildet, abhängig von Geometriedaten einer vorgegebenen Geometrie einen Drehzahlverlauf einzustellen.
Da sowohl die Oberflächenqualität als auch die Geometrie des Werkstücks abhängig ist von der Pulsüberlappung, ist so mittels des Drehzahlverlaufs beides einstellbar.

Gemäß der Erfindung weist die Werkzeugmaschine einen Galvanometerscanner auf, der zwischen dem Ultrakurzpulslaser und dem Werkstück angeordnet ist und der dazu ausgebildet ist, einen Auftreffpunkt des jeweiligen Laserpulses auf der Oberfläche des Werkstücks entlang der Rotationsachse mit einem einstellbaren Scangeschwindigkeitsverlauf zu verschieben. Die Vorrichtung ist gemäß der Erfindung weiter ausgebildet, abhängig von Geometriedaten einer vorgegebenen Geometrie einen Scangeschwindigkeitsverlauf einzustellen.
Mittels des Galvanometerscanners lässt sich der Auftreffpunkt der Laserpulse entlang der Rotationsachse verschieben. Somit kann die Pulsüberlappung sowohl mittels des Drehzahlverlaufs entlang eines Rotationswinkels eingestellt werden, als auch mittels des Scangeschwindigkeitsverlaufs entlang der Rotationsachse. Somit ist eine sehr genaue Einstellung der Pulsüberlappung in zwei Achsen möglich. Somit lässt sich auf sehr genaue Art die Geometrie herstellen.

Gemäß der Erfindung weist die Werkzeugmaschine ein Objektiv auf, das zwischen dem Galvanometerscanner und dem Werkstück angeordnet ist, zum Bündeln der Laserpulse in einem jeweiligen Brennpunkt.
Durch die Verwendung eines Objektivs ist auf einfache Weise eine Einstellung eines Brennpunkts möglich. Somit lassen sich auf einfache Weise die Laserpulse in einem Brennpunkt bündeln.
Gemäß einer weiteren vorteilhaften Ausgestaltung ist das Objektiv ein Planfeldobjektiv. Ein Planfeldobjektiv, welches auch F-Theta-Objektiv genannt wird, ermöglicht, dass der Brennpunkt mittels des Galvanometerscanners entlang einer Gerade verschoben wird, wie beispielsweise parallel zur Rotationsachse. Hiermit lassen sich gegebenenfalls auf einfache Weise vorgegebene Geometrien und/oder vorgegebene Oberflächenqualitäten herstellen.
Gemäß einer weiteren vorteilhaften Ausgestaltung liegt die Brennweite des Objektivs zwischen 50 mm und 100 mm.

Gemäß einer weiteren vorteilhaften Ausgestaltung ist der Ultrakurzpulslaser derart angeordnet, dass die Laserpulse tangential auf das Werkstück auftreffen.

Hiermit ist gegebenenfalls ein sehr guter Materialabtrag möglich. Beispielsweise treffen die Laserpulse tangential und in etwa rechtwinklig zur Rotationsachse auf das Material auf.

Gemäß einer weiteren vorteilhaften Ausgestaltung liegt die Pulsdauer der Laserpulse zwischen 0,5 ps und 1 ps. Hierdurch ist gegebenenfalls ein sehr guter Materialabtrag möglich.

Gemäß einer weiteren vorteilhaften Ausgestaltung liegt die Pulsfolgefrequenz der Laserpulse zwischen 0,5 MHz und 2 MHz.

Gemäß einer weiteren vorteilhaften Ausgestaltung liegt der Leistungsbereich des Ultrakurzpulslasers zwischen 5 W und 10 W.

Ausführungsbeispiele der Erfindung sind anhand der schematischen Zeichnungen näher erläutert. Es zeigen:
- Figur 1: eine Werkzeugmaschine mit einer Steuervorrichtung und
- Figur 2: eine Darstellung einer Pulsüberlappung.

Elemente gleicher Konstruktion oder Funktion sind figurenübergreifend mit den gleichen Bezugszeichen gekennzeichnet.

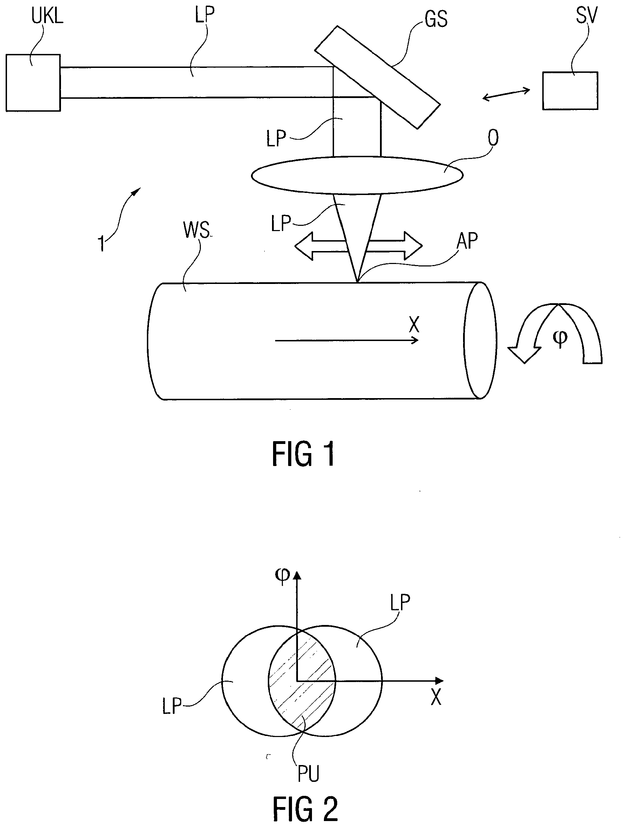

Figur 1 zeigt eine Werkzeugmaschine 1. Die Werkzeugmaschine 1 weist einen Ultrakurzpulslaser UKL auf. Der Leistungsbereich des Ultrakurzpulslasers UKL liegt beispielsweise zwischen 5 W und 10 W.

Der Ultrakurzpulslaser UKL sendet Laserpulse LP aus. Diese Laserpulse LP weisen beispielsweise eine Pulsdauer zwischen 0,5 ps und 1 ps auf. Die Pulsfolgefrequenz der Laserpulse LP liegt beispielsweise zwischen 0,5 MHz und 2 MHz.
Die Laserpulse LP treffen auf einen Galvanometerscanner GS auf. Der Galvanometerscanner GS spiegelt die Laserpulse LP in Richtung eines Objektivs O. Zusätzlich ist mittels des Galvanometerscanners GS ein Auftreffpunkt AP der Laserpulse LP auf der Oberfläche eines Werkstück WS entlang einer Rotationsachse X mit einem einstellbaren Scangeschwindigkeitsverlauf verschiebbar.
Das Objektiv O bündelt die Laserpulse LP in einem jeweiligen Brennpunkt, der beispielsweise dem Auftreffpunkt AP entspricht. Das Objektiv O weist hierfür beispielsweise eine oder mehrere Linsen auf. Beispielsweise ist das Objektiv O ein Planfeldobjektiv, oder auch F-Theta-Objektiv, mittels dessen der Brennpunkt auf einer Gerade verschiebbar ist, die beispielsweise parallel zur Rotationsachse X verläuft. So treffen die Laserpulse LP in dem Auftreffpunkt AP auf dem Werkstück WS auf. Die Laserpulse LP treffen beispielsweise tangential auf das Werkstück WS auf. Beispielsweise treffen sie tangential und in etwa rechtwinklig zur Rotationsachse X auf das Werkstück WS auf.
Mittels einer nicht gezeigten Rotationseinheit lässt sich das Werkstück WS um eine Rotationsachse X mit einem einstellbaren Drehzahlverlauf rotieren.
Auf diese Weise kann Material von dem Werkstück WS abgetragen werden, beispielsweise um eine vorgegebene Geometrie einzustellen und/oder um eine vorgegebene Oberflächenqualität herzustellen.

Die Werkzeugmaschine 1 weist zusätzlich eine Steuervorrichtung SV auf.
Die Steuervorrichtung SV ist dazu ausgebildet, abhängig von Geometriedaten einer vorgegebenen Geometrie den Drehzahlverlauf um die Rotationsachse X einzustellen.

Zusätzlich ist die Steuervorrichtung SV dazu ausgebildet, abhängig von einem vorgegebenen Oberflächenqualitätskennwert, der repräsentativ ist für eine korrespondierende Oberflächenqualität, den Drehzahlverlauf um die Rotationsachse X einzustellen.

Gemäß der Erfindung ist die Steuervorrichtung SV dazu ausgebildet, abhängig von Geometriedaten der vorgegebenen Geometrie den Scangeschwindigkeitsverlauf einzustellen.

Zusätzlich ist die Steuervorrichtung SV dazu ausgebildet, abhängig von einem vorgegebenen Oberflächenqualitätskennwert, der repräsentativ ist für eine korrespondierende Oberflächenqualität, den Scangeschwindigkeitsverlauf einzustellen.
Auf diese Weise lässt sich auf einfache Weise eine Pulsüberlappung PU der einzelnen Laserpulse LP einstellen. Die Pulsüberlappung PU ist abhängig von dem Drehzahlverlauf und dem Scangeschwindigkeitsverlauf. Zusätzlich kann sie abhängig sein von der Pulsfolgefrequenz des Ultrakurzpulslasers UKL, welche beispielsweise konstant ist.
Die Pulsüberlappung PU ist anhand der Figur 2 verdeutlicht. Die Pulsüberlappung PU bedeutet in diesem Zusammenhang die Schnittfläche einer ersten Auftrefffläche eines ersten Laserpulses LP auf dem Werkstück WS mit einer Auftrefffläche eines zweiten Laserpulses LP auf dem Werkstück WS. Die Pulsüberlappung PU ist somit repräsentativ für eine Abtragungsrate, beziehungsweise eine Intensität der Abtragung des Materials.

Die Pulsüberlappung PU ist entlang zwei Achsen einstellbar. Mittels Einstellen des Scangeschwindigkeitsverlaufs mittels des Galvanometerscanners GS ist die Pulsüberlappung PU entlang der Rotationsachse X einstellbar. Mittels Einstellen des Drehzahlverlaufs ist die Pulsüberlappung PU entlang eines Rotationswinkels ϕ einstellbar. In dem Beispiel der Figur 2 ist beispielsweise die Drehzahl gleich 0, da keine Verschiebung entlang des Rotationswinkels ϕ stattfindet. Die Scangeschwindigkeit ist in dem Beispiel größer als 0, da eine Verschiebung entlang der Rotationsachse X stattfindet.

## Patentansprüche

1. Werkzeugmaschine (1) zum Bearbeiten eines Werkstücks (WS), mit
- einer Rotationseinheit, die dazu ausgebildet ist, das Werkstück (WS) um eine Rotationsachse (X) mit einem einstellbaren Drehzahlverlauf zu rotieren,
- einem Ultrakurzpulslaser (UKL) zum Erzeugen von Laserpulsen (LP), der so angeordnet ist, dass mittels der Laserpulse (LP) Material des Werkstücks (WS) abgetragen wird, einem Galvanometerscanner (GS), der zwischen dem Ultrakurzpulslaser (UKL) und dem Werkstück (WS) angeordnet ist, der dazu ausgebildet ist, einen Auftreffpunkt (AP) des jeweiligen Laserpulses (LP) auf der Oberfläche des Werkstücks (WS) entlang der Rotationsachse (X) mit einem einstellbaren Scangeschwindigkeitsverlauf zu verschieben,
- ein Objektiv (O), das zwischen dem Galvanometerscanner (GS) und dem Werkstück (WS) angeordnet ist, zum Bündeln der Laserpulse (LP) in einem jeweiligen Brennpunkt ,
**gekennzeichnet durch** eine Vorrichtung die dazu ausgebildet ist, abhängig von Geometriedaten einer vorgegebenen Geometrie den Drehzahlverlauf einzustellen und abhängig von Geometriedaten einer vorgegebenen Geometrie den Scangeschwindigkeitsverlauf einzustellen.

2. Werkzeugmaschine (1) nach Anspruch 1,
wobei das Objektiv (O) ein Planfeldobjektiv ist.

3. Werkzeugmaschine (1) nach Anspruch 1 oder 2,
wobei die Brennweite des Objektivs (O) zwischen 50 mm und 100 mm liegt.

4. Werkzeugmaschine (1) nach einem der Ansprüche 1 bis 3, bei der der Ultrakurzpulslaser (UKL) derart angeordnet ist, dass die Laserpulse (LP) tangential auf das Werkstück (WS) auftreffen.

5. Werkzeugmaschine (1) nach einem der Ansprüche 1 bis 4,
wobei die Pulsdauer der Laserpulse (LP) zwischen 0,5 ps und 1 ps liegt.

6. Werkzeugmaschine (1) nach einem der Ansprüche 1 bis 5,
wobei die Pulsfolgefrequenz der Laserpulse (LP) zwischen 0,5 MHz und 2 MHz liegt.

7. Werkzeugmaschine (1) nach einem der Ansprüche 1 bis 6,
wobei der Leistungsbereich des Ultrakurzpulslasers (UKL) zwischen 5 W und 10 W liegt.

## Claims

1. Machine tool (1) for machining a workpiece (WS), with
- a rotation unit, which is designed to rotate the workpiece (WS) about an axis of rotation (X) with an adjustable rotational speed progression,
- an ultra-short pulse laser (UKL) for generating laser pulses (LP), which is arranged such that material of the workpiece (WS) is removed by means of the laser pulses (LP), a galvanometer scanner (GS), which is arranged between the ultra-short pulse laser (UKL) and the workpiece (WS) and is designed to displace a point of impingement (AP) of the respective laser pulse (LP) on the surface of the workpiece (WS) along the axis of rotation (X) with an adjustable scanning speed progression,
**characterized by**
- an objective (O), which is arranged between the galvanometer scanner (GS) and the workpiece (WS), for focusing the laser pulses (LP) at a respective focal point,
device which is designed to adjust the rotational speed progression on the basis of geometry data of a specified geometry and to adjust the scanning speed progression on the basis of geometry data of a specified geometry.

2. Machine tool (1) according to Claim 1,
the objective (O) being a flat field objective.

3. Machine tool (1) according to Claim 1 or 2,
the focal length of the objective (O) lying between 50 mm and 100 mm.

4. Machine tool (1) according to one of Claims 1 to 3, in which the ultra-short pulse laser (UKL) is arranged in such a way that the laser pulses (LP) impinge on the workpiece (WS) tangentially.

5. Machine tool (1) according to one of Claims 1 to 4,
the pulse duration of the laser pulses (LP) lying between 0.5 ps and 1 ps.

6. Machine tool (1) according to one of Claims 1 to 5, the pulse repetition frequency of the laser pulses (LP) lying between 0.5 MHz and 2 MHz.

7. Machine tool (1) according to one of Claims 1 to 6, the power range of the ultra-short pulse laser (UKL) lying between 5 W and 10 W.

## Revendications

1. Machine-outil (1), destinée à l'usinage d'une pièce (WS), comprenant
- une unité de rotation conçue pour faire tourner la pièce (WS) sur un axe de rotation (X) à une vitesse de rotation réglable,
- un laser à impulsions ultra-courtes (UKL), destiné à générer des impulsions laser (LP), qui est disposé de manière à éliminer de la matière de la pièce (WS) à l'aide des impulsions laser (LP), un scanner à galvanomètre (GS) qui est disposé entre le laser à impulsions ultra-courtes (UKL) et la pièce (WS) et qui est conçu pour déplacer un point d'impact (AP) de l'impulsion laser (LP) correspondante sur la surface de la pièce (WS) le long de l'axe de rotation (X) à une vitesse de balayage réglable,
- un objectif (O) disposé entre le scanner à galvanomètre (GS) et la pièce (WS) pour focaliser les impulsions laser (LP) en un foyer respectif,
**caractérisée par** un dispositif conçu pour régler la vitesse de rotation en fonction de données d'une géométrie donnée et pour régler la vitesse de balayage en fonction de données d'une géométrie donnée.

2. Machine-outil (1) selon la revendication 1,
l'objectif (O) étant un objectif de champ plan.

3. Machine-outil (1) selon la revendication 1 ou 2,
la longueur focale de l'objectif (O) étant comprise entre 50 mm et 100 mm.

4. Machine-outil (1) selon l'une des revendications 1 à 3,
le laser à impulsions ultracourtes (UKL) étant disposé de manière à ce que les impulsions laser (LP) soient tangentiellement incidentes à la pièce (WS).

5. Machine-outil (1) selon l'une des revendications 1 à 4,
la durée des impulsions laser (LP) étant comprise entre 0,5 ps et 1 ps.

6. Machine-outil (1) selon l'une des revendications 1 à 5,
la fréquence de répétition des impulsions laser (LP) étant comprise entre 0,5 MHz et 2 MHz.

7. Machine-outil (1) selon l'une des revendications 1 à 6,
la plage de puissance du laser à impulsions ultracourtes (UKL) étant comprise entre 5 W et 10 W.
